# EUROPEAN PATENT SPECIFICATION

(11) **EP 3 275 649 B1**
(45) Date of publication and mention of the grant of the patent: **14.07.2021**
(21) Application number: 16768526.2
(22) Date of filing: 14.03.2016
(51) Int. Cl.: C08J 7/04, C08L 65/00, C08L 79/00

(54) **RESIN MOLDED BODY AND METHOD FOR PRODUCING SAME**
HARZFORMKÖRPER UND VERFAHREN ZUR HERSTELLUNG DAVON
CORPS MOULÉ EN RÉSINE ET SON PROCÉDÉ DE PRODUCTION

(30) Priority: 26.03.2015 JP 2015065066
(43) Date of publication of application: 31.01.2018
(73) Proprietor: Rimtec Corporation, Chiyoda-ku Tokyo 100-0005 (JP)
(72) Inventor: KAMEI, Nobuto, Tokyo 100-0005 (JP)
(74) Representative: Adam, Holger
(86) International application number: PCT/JP2016/057977
(87) International publication number: WO 2016/152623

(56) References cited:
- EP-A1- 2 716 448
- WO-A1-2012/161180
- WO-A1-2015/046028
- JP-A- S5 196 895
- JP-A- H01 316 262
- JP-A- H02 158 634
- JP-A- S63 264 626
- JP-A- 2003 231 227
- JP-A- 2006 022 310
- JP-A- 2010 229 166
- JP-A- 2013 256 632

## Description

### TECHNICAL FIELD

The present invention relates to method for producing a resin molded article.

### BACKGROUND ART

High-heat-resistant resins are suitably used in applications that require high heat resistance, such as applications of engine covers for automobiles and electric insulation applications such as encapsulation materials for power semiconductors.

Polymers of cyclic olefins such as norbornenes are generally excellent in heat resistance, and as the techniques of producing a norbornene-based crosslinked polymer having even more improved heat resistance, for example, a method using a given norbornene-based monomer having a polar group (Patent Publication 1) or a method using a given metathesis catalyst (Patent Publication 2) has been proposed.

Patent Publication 3 relates to a multilayer conductive film comprising: a polymer layer 1 including a polymer material having an alicyclic structure and conductive particles; and a layer 2 including a material having durability against positive electrode potential. The polymer material is polynorbornene. The polynorbornene comprises at least one member selected from the group consisting of dicyclopentadiene and tetracyclododecene. The polymer material 2 can be polyamide-imide. The polynorbornene is made by ring-opening polymerization of the alicyclic compounds, dicyclopentadiene and tetracyclododecene in the presence of a catalyst such as ruthenium. The polymer material 2 can be polyamide-imide.

### PRIOR ART REFERENCES

### PATENT PUBLICATIONS

Patent Publication 1: Japanese Patent Laid-Open No. Hei-6-25394
Patent Publication 2: Japanese Patent Laid-Open No. 2004-352896
Patent Publication 3: EP 2 716 448 A1.

### SUMMARY OF THE INVENTION

### PROBLEMS TO BE SOLVED BY THE INVENTION

However, there are yet rooms for improvement in heat resistance and durability of the norbornene-based crosslinked polymers in a high-temperature environment.

Accordingly, an object of the present invention is to provide a method for producing a norbornene-based resin molded article having excellent heat resistance and durability even in a high temperature environment.

### MEANS TO SOLVE THE PROBLEMS

The present invention relates to:
a method for producing a resin molded article as defined in the above [1], including
step (1) heating a blend comprising at least one member selected from the group consisting of dicyclopentadiene-based monomers, tetracyclododecene-based monomers, and tricyclopentadiene-based monomers, and a metathesis polymerization catalyst to carry out a polymerization curing; and
step (2) forming a polyamide-imide layer on a surface of the norbornene-based crosslinked polymer obtained in the step (1),
wherein the polymerization curing of the blend in the step (1) comprises: step (i): heating the blend to a temperature lower than a deactivation temperature of the metathesis polymerization catalyst to carry out a primary curing; and step (ii): heating a cured product obtained in the step (i) to a temperature equal to or higher than a deactivation temperature of the metathesis polymerization catalyst to carry out a secondary curing.

### EFFECTS OF THE INVENTION

The resin molded article of the present invention exhibits some effects of having excellent heat resistance and durability even in a high-temperature environment.

### MODES FOR CARRYING OUT THE INVENTION

The resin molded article of the present invention is a resin molded article wherein a surface of a norbornene-based crosslinked polymer containing at least one monomer unit selected from the group consisting of dicyclopentadiene-based monomer units, tetracyclododecene-based monomer units, and tricyclopentadiene-based monomer units as main ingredients, the norbornene-based crosslinked polymer having a high glass transition temperature for a resin, is coated with a polyamide-imide layer. The resin molded article is provided with a very high heat resistance, for example, the resin molded article has excellent heat resistance even in a high-temperature environment of, for example, 200°C or higher. Further, usually even a high-heat-resistant resin would progress in oxidization from the surface with the passage of time in a high-temperature environment, thereby lowering strength; however, since in the resin molded article of the present invention, the surface of the norbornene-based crosslinked polymer is coated with a polyamide-imide layer, so that the lowering of the strength by progression in oxidization of the polymer is controlled, so that the resin molded article is also provided with excellent durability.

The norbornene-based crosslinked polymer which serves as a base material for the resin molded article of the present invention contains at least one member selected from the group consisting of dicyclopentadiene-based monomer units, tetracyclododecene-based monomer units, and tricyclopentadiene-based monomer units in an amount of 50% by mass or more.

In the present invention, the dicyclopentadiene-based monomer units, the tetracyclododecene-based monomer units, and the tricyclopentadiene-based monomer units refer to units obtained by ring-opening polymerization of each of the monomers.

In the present invention, the dicyclopentadiene-based monomer refers to dicyclopentadiene, or a tricyclic compound in which a part of hydrogen in the structure of dicyclopentadiene is substituted with a substituent. The tetracyclododecene-based monomer refers to tetracyclododecene, or a tetracyclic compound in which a part of hydrogen in the structure of tetracyclododecene is substituted with a substituent. The tricyclopentadiene-based monomer refers to tricyclopentadiene, or a pentacyclic compound in which a part of hydrogen in the structure of tricyclopentadiene is substituted with a substituent.

These monomers may have a substituent such as an alkyl having from 1 to 5 carbon atoms, such as a methyl group, an ethyl group, a propyl group, or a butyl group; an alkenyl group having from 2 to 5 carbon atoms, such as a vinyl group; an alkylidene group having from 1 to 5 carbon atoms, such as an ethylidene group; or an aryl group having from 6 to 10 carbon atoms, such as a phenyl group, a tolyl group, or a naphthyl group.

Further, these monomers may have, as a substituent, a polar group, such as a hydroxyl group, an ester group (-C(O)O-), an ether group (-O-), an epoxy group, a cyano group, or a halogen atom.

In the resin molded article of the present invention, as described later, it is not necessarily required that the surface of the norbornene-based crosslinked polymer is coated with a polyamide-imide layer. Especially, if the monomer used has a polar group such as a hydroxyl group, an epoxy group, and a cyano group, adhesion of the norbornene-based crosslinked polymer to a solid surface is improved; therefore, for example, in a case where the resin molded article of the present invention is used as encapsulation materials for power semiconductors, it is preferable when the parts of the exposed surface of the norbornene-based crosslinked polymer without being coated with a polyamide-imide layer are brought into contact with semiconductor elements which are to be encapsulated, because adhesion to the resin molded article is improved, and insulation performance is sufficiently exhibited.

Specific examples of the dicyclopentadiene-based monomers include dicyclopentadiene, 2-methyldicyclopentadiene, 2,3-dimethyldicyclopentadiene, 2,3-dihydroxydicyclopentadiene, dicyclopentadiene monoepoxide, vinylnorbornene, and 5-ethylidenenorbomene.

Specific examples of the tetracyclododecene-based monomers include tetracyclododecene, ethylidene tetracyclododecene, and methanotetrafluorofluorene.

Specific examples of the tricyclopentadiene-based monomers include 3a,4,4a,5,8,8a,9,9a-octahydro-4,9:5,8-dimethano-1H-benzo[f]indene and 1,4:4a,4b,5,8,8a,9a-octahydro-1,4:5,8-dimethano-1H-fluorene (these trivial names are all tricyclopentadiene), and tricyclopentadiene monoepoxide.

As the monomer usable in the present invention, since a polymer with low hygroscopicity and high strength is obtained, dicyclopentadiene, tetracyclododecene, 3a,4,4a,5,8,8a,9,9a-octahydro-4,9:5,8-dimethano-1H-benzo[f]indene, and 1,4:4a,4b,5,8,8a,9a-octahydro-1,4:5,8-dimethano-1H-fluorene are especially preferred.

The above monomers are used alone or in a combination of two or more kinds.

The norbornene-based crosslinked polymer contains at least one member selected from the group consisting of dicyclopentadiene-based monomer units, tetracyclododecene-based monomer units, and tricyclopentadiene-based monomer units in an amount of 50% by mass or more. The content of the at least one member is preferably from 60 to 100% by mass, and more preferably from 70 to 100% by mass, from the viewpoint of even more improving heat resistance of the polymer.

Among the norbornene-based crosslinked polymers, the norbornene-based crosslinked polymers containing tricyclopentadiene-based monomer units in an amount of preferably 50% by mass or more, more preferably from 60 to 100% by mass, and especially preferably from 70 to 100% by mass are preferred, from the viewpoint of improving heat resistance and insulation property in good balance.

The norbornene-based crosslinked polymer is produced by, for example, a method for production described later, and bubbles may be generated during the polymerization reaction, and the bubbles may be contained in the polymer obtained. When bubbles exist in the polymer, insulation property thereof would be lowered. Surprisingly, when a polymerization reaction is carried out using a blend containing tricyclopentadiene-based monomers in a large amount, the generation of bubbles is suppressed. Among the polymers obtained in the manner described above, especially the norbornene-based crosslinked polymer that contains tricyclopentadiene-based monomer units in the above range does not substantially contain any bubbles, so that it is assumed that heat resistance and insulation property are improved in good balance.

Here, the norbornene-based crosslinked polymer may contain monomer units of other monomers copolymerizable with the dicyclopentadiene-based monomers, the tetracyclododecene-based monomers, or the tricyclopentadiene-based monomers, in addition to the dicyclopentadiene-based monomer units, the tetracyclododecene-based monomer units, or the tricyclopentadiene-based monomer units. The content of the other monomer units is preferably 40% by mass or less, more preferably 10% by mass or less, and even more preferably 5% by mass or less, from the viewpoint of maintaining high heat resistance. The other monomers include, for example, monocyclic cycloolefins, such as cyclobutene, cyclopentene, cyclopentadiene, cyclohexene, cycloheptene, cyclooctene, and cyclododecene.

The norbornene-based crosslinked polymer in the present invention is obtained, as described later, by subjecting at least one member selected from the group consisting of dicyclopentadiene-based monomers, tetracyclododecene-based monomers, and tricyclopentadiene-based monomers mentioned above to a bulk ring-opening polymerization and crosslinking. The norbornene-based crosslinked polymer is a resin having a high glass transition temperature (Tg), and having excellent heat resistance. In addition, as described later, a norbornene-based crosslinked polymer having a very high glass transition temperature can be obtained, as compared to the conventional norbornene-based crosslinked polymer, by further heating a cured product obtained by bulk ring-opening reaction (primary curing) at a given temperature to carry out a secondary curing. Conventionally, when norbornene-based monomers are subjected to bulk ring-opening polymerization, sufficient crosslinking is caused with the polymerization reaction, and heating after the polymerization is considered to have no merits at all other than degrading the polymer obtained. However, surprisingly, it is assumed that crosslinking even more progresses by further heating a polymer obtained at a given temperature, so that it could be seen that a norbornene-based crosslinked polymer having an unexpectedly high glass transition temperature is obtained.

The glass transition temperature of the norbornene-based crosslinked polymer usable in the present invention is not particularly limited, and the glass transition temperature is usually 120°C or higher, preferably 240°C or higher, more preferably 250°C or higher, and even more preferably 270°C or higher. Here, the higher the glass transition temperature, the more preferred, but the upper limit thereof is usually 330°C or so.

Here, the glass transition temperature of the norbornene-based crosslinked polymer can be obtained with a dynamic mechanical analyzer (DMA) in a tensile mode by measuring a tan δ under the conditions of a heating rate of 5°C/min from room temperature, and a measurement frequency of 1 Hz, and determining a temperature at which tan δ takes a maximal value. As the above instrument, for example, one manufactured by Seiko Instruments Inc. under the product name of "DMS 6100" can be used.

The polyamide-imide for coating the surface of the norbornene-based crosslinked polymer includes, for example, one having a repeating structural unit represented by the following formula (A): 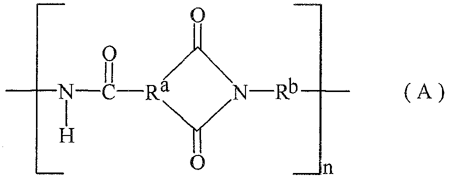 and in the formula (A), R^{a} stands for a trivalent organic group;
R^{b} stands for a bivalent organic group; and n is a positive integer.

The method for synthesizing a polyamide-imide having a repeating structural unit represented by the formula (A) includes, but not particularly limited to, for example, (1) a method of reacting a diisocyanate and a tribasic acid anhydride; (2) a method of reacting a diamine and a tribasic acid anhydride; (3) a method of reacting a diamine and a tribasic acid anhydride chloride.

Compounds that are usable in the above methods (1) to (3) include the followings:
The diisocyanate includes 4,4'-diphenylmethane diisocyanate, xylylene diisocyanate, 3,3'-diphenylmethane diisocyanate, 4,4'-diphenylether diisocyanate, 3,3'-diphenylether diisocyanate, paraphenylene diisocyanate, and the like, among which 4,4'-diphenylmethane diisocyanate, 3,3'-diphenylmethane diisocyanate, 4,4'-diphenylether diisocyanate, and 3,3'-diphenylether diisocyanate are preferred.

The diamine includes 4,4'-diaminodiphenyl sulfone, 3,3'-diaminodiphenyl sulfone, 4,4'-diaminodiphenyl ether, 3,3'-diaminodiphenyl ether, 4,4'-diaminodiphenylmethane, 3,3'-diaminodiphenylmethane, xylylene diamine, phenylene diamine, and the like, among which 4,4'-diaminodiphenyl ether, 3,3'-diaminodiphenyl ether, 4,4'-diaminodiphenylmethane, and 3,3'-diaminodiphenylmethane are preferred.

In addition, preferred examples of the tribasic acid anhydride include trimellitic anhydride, and preferred examples of the tribasic acid anhydride chloride include trimellitic anhydride chloride.

When the polyamide-imide is synthesized, a dicarboxylic acid, a tetracarboxylic dianhydride or the like may be concurrently reacted within the range that would not impair the properties of the polyamide-imide.

The dicarboxylic acid includes terephthalic acid, isophthalic acid, adipic acid, and the tetracarboxylic dianhydride includes pyromellitic dianhydride, benzophenone tetracarboxylic dianhydride, biphenyltetracarboxylic dianhydride. The amount of these components used is 50% by equivalence or less of the entire acid component.

The above compound can be subjected to polymerization curing under heating conditions at 100° to 250°C or so, or can be subjected to polymerization curing by irradiating with ultraviolet rays in the presence of a photopolymerization initiator.

The glass transition temperature of the polyamide-imide is preferably 200°C or higher, more preferably from 250° to 350°C, and even more preferably from 280° to 350°C, from the viewpoint of heat resistance.

Here, the glass transition temperature of the polyamide-imide can be measured in accordance with a method similar to that for the glass transition temperature of the norbornene-based crosslinked polymer.

The resin molded article of the present invention can be efficiently produced by a method including:
step (1) heating a blend comprising at least one member selected from the group consisting of dicyclopentadiene-based monomers, tetracyclododecene-based monomers, and tricyclopentadiene-based monomers mentioned above, and a metathesis polymerization catalyst to carry out a polymerization curing; and
step (2) forming a polyamide-imide layer on a surface of the norbornene-based crosslinked polymer obtained in the step (1).

The blend usable in the step (1) contains a metathesis polymerization catalyst together with the above monomer components.

As mentioned above, in the above norbornene-based crosslinked polymer which contains the tricyclopentadiene-based monomer units in an amount of 50% by mass or more, heat resistance and insulation property are improved in good balance. As the above blend, one containing the tricyclopentadiene-based monomers in an amount of 50% by mass or more, preferably from 60 to 100% by mass, and more preferably from 70 to 100% by mass, of the entire monomers contained therein, are preferably used, from the viewpoint of efficiently producing the polymer. Here, the composition of each of the monomers contained in the blend and the composition of each of the monomer units in the norbornene-based crosslinked polymer obtained are substantially the same.

The metathesis polymerization catalyst usable in the present invention is a complex composed of a transition metal atom as a center atom and plural ions, atoms, multi-atomic ions, and/or compounds bound thereto. As the transition metal atom, the atoms of Groups 5, 6 and 8 (Long-period type Periodic Table, hereinafter referred to the same) are used. Although the atoms of each of the Groups are not particularly limited, the atoms of Group 5 include, for example, tantalum, the atoms of Group 6 include, for example, molybdenum and tungsten, and the atoms of Group 8 include, for example, ruthenium and osmium. Among these transition metal atoms, ruthenium and osmium of Group 8 are preferred. In other words, the metathesis polymerization catalyst used in the present invention is preferably a complex with ruthenium or osmium as a center atom, and more preferably a complex with ruthenium as a center atom. As the complex with ruthenium as a center atom, a ruthenium-carbene complex composed of ruthenium and carbene compounds coordinated thereto is preferred. Here, the term "carbene compound" collectively refers to compounds having a methylene free radical, which are compounds having a divalent carbon atom (carbene carbon) that is not electrically charged, as represented by (>C:). Since the ruthenium-carbene complex has excellent catalytic activity upon the bulk ring-opening polymerization, the polymer obtained has less odor originated from unreacted monomers, so that a high-quality polymer is obtained with excellent productivity. In addition, the complex is relatively stable against oxygen or water in the air, and is less likely to be deactivated, so that the complex can be used in the air.

The ruthenium-carbene complex includes a complex represented by the following formula (1) or formula (2).

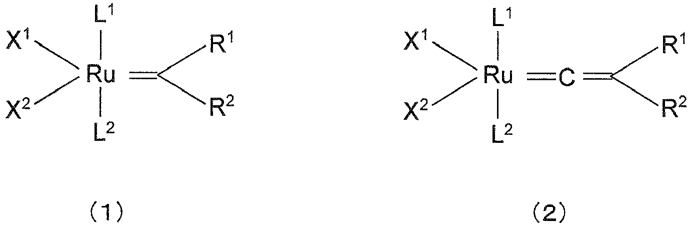

In the above formulas (1) and (2), each of R¹ and R² is independently a hydrogen atom; a halogen atom; or an organic group having from 1 to 20 carbon atoms, which may contain a halogen atom, an oxygen atom, a nitrogen atom, a sulfur atom, a phosphorus atom or a silicon atom, and these groups may have a substituent, or may be bound to each other to form a ring. Examples of R¹ and R² that are bound to each other to form a ring include an indenylidene group which may have a substituent, such as a phenylindenylidene group.

Specific examples of the organic group having from 1 to 20 carbon atoms which may contain a halogen atom, an oxygen atom, a nitrogen atom, a sulfur atom, a phosphorus atom, or a silicon atom include an alkyl group having from 1 to 20 carbon atoms, an alkenyl group having from 2 to 20 carbon atoms, an alkynyl group having from 2 to 20 carbon atoms, an aryl group having from 6 to 20 carbon atoms, an alkoxy group having from 1 to 20 carbon atoms, an alkenyloxy group having from 2 to 20 carbon atoms, an alkynyloxy group having from 2 to 20 carbon atoms, an aryloxy group having from 6 to 20 carbon atoms, an alkylthio group having from 1 to 8 carbon atoms, a carbonyloxy group, an alkoxycarbonyl group having from 1 to 20 carbon atoms, an alkylsulfonyl group having from 1 to 20 carbon atoms, an alkylsulfinyl group having from 1 to 20 carbon atoms, an alkylsulfonic acid group having from 1 to 20 carbon atoms, an arylsulfonic acid group having from 6 to 20 carbon atoms, a phosphonic acid group, an arylphosphonic acid group having from 6 to 20 carbon atoms, an alkylammonium group having from 1 to 20 carbon atoms, and an arylammonium group having from 6 to 20 carbon atoms. These organic groups having from 1 to 20 carbon atoms which may contain a halogen atom, an oxygen atom, a nitrogen atom, a sulfur atom, a phosphorus atom, or a silicon atom may have a substituent. Examples of the substituent include an alkyl group having from 1 to 10 carbon atoms, an alkoxy group having from 1 to 10 carbon atoms, an aryl group having from 6 to 10 atoms.

Each of X¹ and X² stands for independently any anionic ligand. The anionic ligand refers to a ligand having a negative electric charge when separated from a center metal atom, and includes, for example, a halogen atom, a diketonate group, a substituted cyclopentadienyl group, an alkoxyl group, an aryloxy group, a carboxyl group

L¹ and L² stand for a heteroatom-containing carbene compound or a neutral electron donating compound other than the heteroatom-containing carbene compound. The heteroatom-containing carbene compound and the neutral electron donating compound other than the heteroatom-containing carbene compound are compounds having neutral electric charges when separated from the center metal. The heteroatom containing-carbene compound is preferred, from the viewpoint of improving catalytic activity. The heteroatom means atoms of Groups 15 and 16 of the Periodic Table, and specific examples include a nitrogen atom, an oxygen atom, a phosphorus atom, a sulfur atom, an arsenic atom, a selenium atom. Among them, a nitrogen atom, an oxygen atom, a phosphorus atom, and a sulfur atom are preferred, and a nitrogen atom is especially preferred, from the viewpoint of obtaining a stable carbene compound.

As the above heteroatom-containing carbene compound, a compound represented by the following formula (3) or (4) is preferred, and the compound represented by the following formula (3) is especially preferred, from the viewpoint of improving catalytic activity.

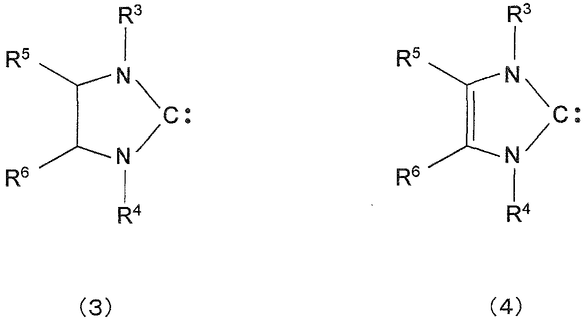

In the above formulas (3) and (4), each of R³, R⁴, R⁵ and R⁶ stands for independently a hydrogen atom; a halogen atom; or an organic group having from 1 to 20 carbon atoms which may have a halogen atom, an oxygen atom, a nitrogen atom, a sulfur atom, a phosphorus atom, or a silicon atom. Specific examples of the organic group having from 1 to 20 carbon atoms which may have a halogen atom, an oxygen atom, a nitrogen atom, a sulfur atom, a phosphorus atom, or a silicon atom are the same as those of the above formulas (1) and (2).

Alternatively, R³, R⁴, R⁵ and R⁶ may be bound to each other in any combinations to form a ring.

Here, in order to make the effects of the present invention more remarkable, it is preferable that R⁵ and R⁶ are hydrogen atoms. In addition, R³ and R⁴ are preferably aryl groups which may have a substituent, and the substituent is more preferably a phenyl group having an alkyl group having from 1 to 10 carbon atoms, and especially preferably a mesityl group.

The above neutral electron donating compound includes, for example, an oxygen atom, water, carbonyls, ethers, nitriles, esters, phosphines, phosphinites, phosphites, sulfoxides, thioethers, amides, imines, aromatics, cyclic diolefins, olefins, isocyanides, and thiocyanates.

In the above formula (1) and (2), each of R¹, R², X¹, X², L¹ and L² may form a multidentate chelate ligand, and/or may bond together in any combinations to form a multidentate chelate ligand.

In addition, as the ruthenium-carbene complex used in the present invention, among the compounds represented by the above formula (1) or (2), the compound represented by the above formula (1) is preferred, from the viewpoint of improving heat resistance and insulation property of the norbornene-based crosslinked polymer in good balance. Among them, a compound represented by the formula (5) or the formula (6) given below is more preferred. By using the compound as a metathesis polymerization catalyst, the polymerization reaction appropriately progresses, and the generation of bubbles is suppressed, so that it is assumed that heat resistance and insulation property of the norbornene-based crosslinked polymer are improved in good balance.

The formula (5) is given hereinbelow.

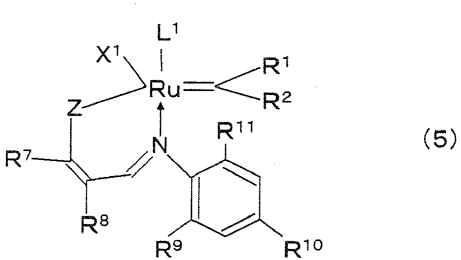

In the above formula (5), Z is an oxygen atom, a sulfur atom, a selenium atom, NR¹², PR¹² or AsR¹², wherein R¹² is a hydrogen atom; a halogen atom; or an organic group having from 1 to 20 carbon atoms which may contain a halogen atom, an oxygen atom, a nitrogen atom, a sulfur atom, a phosphorus atom, or a silicon atom. Since the effects of the present invention are even more remarkable, it is preferable that Z is an oxygen atom.

Here, R¹, R², X¹ and L¹ are the same as defined in the cases of the above formula (1) and (2), which may form a multidentate chelate ligand and/or may bond together in any combinations to form a multidentate chelate ligand, and it is preferable that X¹ and L¹ do not form a multidentate chelate ligand, and that R¹ and R² are bound to each other to form a ring, more preferably an indenylidene group which may have a substituent, and especially preferably a phenylindenylidene group.

In addition, specific examples of the organic group having from 1 to 20 carbon atoms which may contain a halogen atom, an oxygen atom, a nitrogen atom, a sulfur atom, a phosphorus atom, or a silicon atom are the same as the cases of the above formulas (1) and (2).

In the above formula (5), each of R⁷ and R⁸ is independently a hydrogen atom, an alkyl group having from 1 to 20 carbon atoms, an alkenyl group having from 2 to 20 carbon atoms, or a heteroaryl group having from 6 to 20 carbon atoms, and these groups may have a substituent, or may be bound to each other to form a ring. Examples of the substituent include an alkyl group having from 1 to 10 carbon atoms, an alkoxy group having from 1 to 10 carbon atoms, or an aryl group having from 6 to 10 carbon atoms. The ring in a case where a ring is formed may be any of aromatic rings, alicyclic rings, and heterocyclic rings. It is preferable that an aromatic ring is formed, it is more preferable that an aromatic ring having from 6 to 20 carbon atoms is formed, and it is especially preferable that an aromatic ring having 6 to 10 carbon atoms is formed.

In the above formula (5), each of R⁹, R¹⁰, and R¹¹ is independently a hydrogen atom; a halogen atom; or an organic group having from 1 to 20 carbon atoms which may contain a halogen atom, an oxygen atom, a nitrogen atom, a sulfur atom, a phosphorus atom, or a silicon atom, and these groups may have a substituent, or may be bound to each other to form a ring. In addition, specific examples of the organic group having from 1 to 20 carbon atoms which may contain a halogen atom, an oxygen atom, a nitrogen atom, a sulfur atom, a phosphorus atom, or a silicon atom are the same as the cases of the above formulas (1) and (2).

It is preferable that R⁹, R¹⁰ and R¹¹ are a hydrogen atom or an alkyl group having from 1 to 20 carbon atoms, and especially preferably a hydrogen atom or an alkyl group having from 1 to 3 carbon atoms.

Here, specific examples of the compound represented by the above formula (5) and production methods thereof include those described in, for example, WO 03/062253 (Japanese Unexamined Patent Publication No. 2005-515260). The catalyst deactivation temperature of the compound is usually 230°C or lower.

The formula (6) is given hereinbelow.

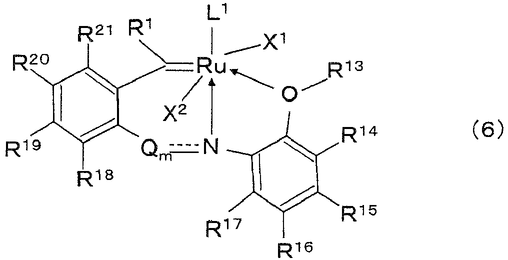

In the above formula (6), m is 0 or 1. m is preferably 1, and in that case Q is an oxygen atom, a nitrogen atom, a sulfur atom, a methylene group, an ethylene group, or a carbonyl group, and preferably a methylene group.

is a single bond or a double bond, and preferably a single bond.

R¹, X¹, X² and L¹ are the same as the cases of the above formulas (1) and (2), each of which may form a multidentate chelate ligand and/or may bond together in any combinations to form a multidentate chelate ligand. It is preferable that X¹, X² and L¹ do not form a multidentate chelate ligand, and that R¹ is a hydrogen atom.

Each of R¹³ to R²¹ is independently a hydrogen atom; a halogen atom; or an organic group having from 1 to 20 carbon atoms which may contain a halogen atom, an oxygen atom, a nitrogen atom, a sulfur atom, a phosphorus atom, or a silicon atom, and these groups may have a substituent, or may be bound to each other to form a ring. In addition, specific examples of the organic group having from 1 to 20 carbon atoms which may contain a halogen atom, an oxygen atom, a nitrogen atom, a sulfur atom, a phosphorus atom, or a silicon atom are the same as the cases of the above formulas (1) and (2).

R¹³ is preferably an alkyl group having from 1 to 20 carbon atoms, and more preferably an alkyl group having from 1 to 3 carbon atoms, R¹⁴ to R¹⁷ are preferably a hydrogen atom, and R¹⁸ to R²¹ are preferably a hydrogen atom or a halogen atom.

Here, specific examples of the compound represented by the above formula (6) and production methods thereof include those described in, for example, WO 11/079799 (Japanese Unexamined Patent Publication No. 2013-516392). The catalyst deactivation temperature of the compound is usually 230°C or lower.

The amount of the metathesis polymerization catalyst used is preferably 0.01 mmol or more, more preferably 0.1 to 50 mmol, and even more preferably from 0.1 to 20 mmol, based on one mol of the entire monomers used in the reaction.

The blend may contain other components besides the above monomer components and the metathesis polymerization catalyst, and other components as mentioned above include activators, polymerization retardants, fillers, radical generators, modifiers, antioxidants, colorants, photostabilizers, flame retardants.

The activator is a compound that acts as a cocatalyst of the metathesis polymerization catalyst mentioned above to improve polymerization activity of the metathesis polymerization catalyst mentioned above. The activator as mentioned above is not particularly limited, and specific examples thereof include organoaluminum compounds such as alkylaluminum halides such as ethylaluminum dichloride and diethylaluminum chloride, and alkoxyalkylaluminum halides; organotin compounds such as tetrabutyltin; organozinc compounds such as diethylzinc; chlorosilane compounds such as dimethyl monochlorosilane, dimethyl dichlorosilane, diphenyl dichlorosilane, tetrachlorosilane, bicycloheptenylmethyl dichlorosilane, phenylmethyl dichlorosilane, dihexyl dichlorosilane, phenyl trichlorosilane, and methyl trichlorosilane.

The amount of the activator used is not particularly limited, and the amount used, based on one mol of the metathesis polymerization catalyst, is preferably 0.1 mol or more, and more preferably 1 mol or more, and the upper limit of the amount used is preferably 100 mol or less, and more preferably 20 mol or less. When the amount of the activator used is too small, the polymerization activity becomes too low, and the time required for the reaction becomes long, thereby lowering the production efficiency. On the contrary, when the amount used is too large, the reaction becomes exceedingly intense, so that a desired polymer is less likely to be obtained.

The polymerization retardant is purposed for suppressing an initiation of the polymerization during the preparation of the blend by mixing monomer components and a metathesis polymerization catalyst. The polymerization retardant as mentioned above includes phosphines, phosphites, vinyl ether derivatives, ethers, esters, nitrile compounds, pyridine derivatives, alcohols, acetylenes, and α-olefins.

The amount of the polymerization retardant used is not particularly limited, and the amount used is preferably 15 parts by mass or more and 5,000 parts by mass or less, more preferably from 15 to 1,800 parts by mass, more preferably from 50 to 900 parts by mass, and even more preferably from 150 to 500 parts by mass, based on 100 parts by mass of the metathesis polymerization catalyst.

The filler is not particularly limited, and includes, for example fibrous fillers having an aspect ratio of from 5 to 100, and particulate fillers having an aspect ratio of from 1 to 2. In addition, these fibrous fillers and particulate fillers can be used in combination.

Specific examples of the fibrous filler include glass fibers, carbon fibers, wollastonite, potassium titanate, zonolite, basic magnesium sulfate, aluminum borate, tetra-pod shaped zinc oxide, gypsum fibers, phosphate fibers, alumina fibers, acicular calcium carbonate, acicular boehmite. Among them, wollastonite is preferred, from the aspect of being capable of increasing rigidity with a small amount added and not inhibiting the bulk open-ring polymerization reaction.

Specific examples of the particulate filler include calcium carbonate, calcium hydroxide, calcium silicate, calcium sulfate, aluminum hydroxide, magnesium hydroxide, titanium oxide, zinc oxide, barium titanate, silica, alumina, carbon black, graphite, antimony oxide, red phosphorus, various metal powders, clays, various ferrites, hydrotalcite. Among them, silica, alumina, and aluminum hydroxide are preferred, because they do not inhibit the bulk ring-opening polymerization reaction.

In addition, the above filler of which surface is hydrophobically treated is preferable. By using a hydrophobically treated filler, the aggregation and sedimentation of the filler in the blend can be prevented, and the dispersion of the filler in the polymer obtained can be made homogeneous. The treatment agent used in the hydrophobic treatment includes silane coupling agents such as vinyltrimethoxysilane, titanate coupling agents, aluminate coupling agents, fatty acids such as stearic acid, fats and oils, surfactants, waxes, and the like. Here, the hydrophobic treatment of the filler can also be carried out by concurrently mixing the above treatment agent with the filler when the blend is prepared.

The amount of the filler blended in the blend is preferably from 10 to 1,000 parts by mass, and more preferably from 100 to 500 parts by mass, based on 100 parts by mass of the entire monomer component used. By having the amount of the filler blended in the above range, strength of the polymer obtained can be increased.

The radical generator includes organic peroxides, diazo compounds, and nonpolar radical generators, and the like that are known in the art. Among them, the organic peroxide is preferred.

The organic peroxide includes, for example, hydroperoxides such as *t*-butyl hydroperoxide and cumene hydroperoxide; dialkyl peroxides such as di-*t*-butyl peroxide, 2,5-dimethyl-2,5-di(*t-*butylperoxy)-3-hexyne, and 2,5-dimethyl-2,5-di(t-butylperoxy)hexane. The dialkyl peroxide is preferred, from the aspect that the impediment to the metathesis polymerization reaction is small.

The amount of the radical generator blended in the blend is usually from 0.5 to 2.0 parts by mass, based on 100 parts by mass of the entire monomer components used.

Other modifiers are also known in the art, which can be properly blended in a desired amount in the blend and used.

The blend can be prepared by mixing a metathesis polymerization catalyst, at least one member selected from the group consisting of dicyclopentadiene-based monomers, tetracyclododecene-based monomers, and tricyclopentadiene-based monomers, and optionally other monomers and/or other components, in accordance with a known method. Here, the blend may be in a solid form or a liquid form at room temperature, according to a melting point of the monomer components used.

In addition, the blend may be cooled and solidified. The term "cooled and solidified" means to solidify under cooling. The blend can be prepared, for example, in accordance with the following two methods.

In a first method, monomer components previously cooled to a temperature equal to or lower than a freezing point and solidified, a metathesis polymerization catalyst, and optionally added other components are mixed while cooling the mixture to a temperature at which the monomer components do not substantially melt, and the mixture obtained is subjected to pressure molding under cooling with, for example, a tableting machine or a press molding machine to allow cooling and solidification, to prepare a blend. Although the temperature at which each of the components is mixed depends on the monomer components used, it is preferable that the temperature is usually 25°C or lower.

In a second method, liquid monomer components, a metathesis polymerization catalyst, and optionally added other components are mixed at a temperature in which a mixture obtained maintains a liquid state, and the mixture is cooled and solidified utilizing, for example, a mold given later, before a bulk ring-opening polymerization of the monomer components is substantially progressed, to prepare a blend. Although the temperature at which each of the components is mixed depends on the monomer components used, it is preferable that the temperature is usually from 30° to 60°C.

Here, in both the methods, although the cooling temperature when cooling and solidifying depends upon the monomer components used, it is preferable that the cooling temperature is usually from -60° to 0°C.

In the step (1), a blend is heated to carry out a polymerization curing. Upon the polymerization curing, the monomer components are subjected to a bulk ring-opening polymerization, and at the same time a crosslinking reaction progresses, so that a norbornene-based crosslinked polymer is obtained as a cured product. The polymerization curing is carried out in two or more steps, while keeping at a constant heating temperature or arbitrarily varying heating temperatures in each step, so long as the exhibition of the effects of the present invention is not inhibited. Among them, since a norbornene-based crosslinked polymer having a very high glass transition temperature is obtained, as compared to the conventional norbornene-based crosslinked polymers, the polymerization curing is carried out by
step (i) heating the above blend to a temperature lower than a deactivation temperature of the above metathesis polymerization catalyst to carry out a primary curing; and
step (ii) heating a cured product obtained in the step (i) to a temperature equal to or higher than the deactivation temperature of the above metathesis polymerization catalyst to carry out a secondary curing.

The polymerization curing of a blend in the step (1) will be explained hereinbelow by method of the present invention in which the step (i) and the step (ii) are carried out.

In the step (i), the blend is heated to a temperature lower than a deactivation temperature of the metathesis polymerization catalyst to carry out a primary curing. Although the deactivation temperature of the metathesis polymerization catalyst varies depending upon the kinds of individual catalyst, the deactivation temperature can be obtained by referring to the instruction manual of supplier, or experimentally. In addition, when plural metathesis polymerization catalysts are used, a catalyst with the lowest deactivation temperature would be the subject for the deactivation temperature. In the step (i), heating is carried out to preferably a temperature which is lower by 10°C or more, more preferably a temperature which is lower by 20°C or more, and even more preferably a temperature which is lower by 30°C or more, than the deactivation temperature of the metathesis polymerization catalyst used. Specific temperature ranges of the heating temperature in the step (i) are usually 25°C or higher and lower than 220°C, preferably from 25° to 210°C, and more preferably from 60° to 200°C. The heating time for primary curing is usually from one second to 20 minutes, and preferably from 10 seconds to 5 minutes.

When the blend is subjected to a primary curing, the monomer components are subjected to bulk ring-opening polymerization, and at the same time crosslinking reaction progresses, thereby obtaining a cured product.

In the step (i), the method for carrying out a primary curing of a blend is not limited, and the method includes, for example, (a) a method including coating a support with a blend, and then carrying out a bulk ring-opening polymerization; (b) a method including injecting or placing a blend to a space portion of a mold, and then carrying out a bulk ring-opening polymerization; (c) a method including impregnating a blend to a fibrous reinforcing material, and then carrying out a bulk ring-opening polymerization.

According to the method of (a), a cured product in the form of a film, a plate is obtained. The thickness of the cured product is usually 15 mm or less, preferably 10 mm or less, and more preferably 5 mm or less.

The support includes, for example, films or plates made of resins such as polyethylene terephthalate, polypropylene, polyethylene, polycarbonate, polyethylene naphthalate, polyarylate, and nylon; and films or plates made of metal materials such as iron, stainless steel, copper, aluminum, nickel, chromium, gold, and silver. Among them, the use of resin films or metal foils is preferred. The thickness of these resin films or metal foils is usually from 1 to 150 µm, preferably from 2 to 100 µm, and more preferably from 3 to 75 µm, from the viewpoint of workability.

The method for coating a support with a blend includes known coating methods such as a spray-coating method, a dip coating method, a roller coating method, a curtain coating method, a die coating method, and a slit coating method.

The blend coated to a support is dried as desired, and thereafter heated to carry out a bulk ring-opening polymerization. The heating method includes a method of placing on a hot plate the blend coated to a support, and heating the blend; a method of heating a blend while applying pressure with a press machine (hot pressing); a method of applying pressure with a heated roller; a method of using a heated furnace.

The shape of the cured product obtained according to a method of (b) can be optionally set depending upon a mold. For example, the shape includes, films, pillars, and any other three-dimensional shapes.

In this method, it is preferable that the blend can be prepared by the following two methods, depending upon whether or not a metathesis polymerization catalyst used would need an activator (cocatalyst).

Specifically, in a case where a metathesis polymerization catalyst to be used does not require an activator, a pre-blend (α) containing monomer components and a pre-blend (β) containing a metathesis polymerization catalyst may be mixed. The pre-blend (β) can be prepared by, for example, dissolving or dispersing a metathesis polymerization catalyst in a small amount of a proper solvent. The solvent includes, for example, aromatic hydrocarbons such as toluene, xylene, ethylbenzene, and trimethylbenzene; ketones such as methyl ethyl ketone, cyclopentanone, cyclohexanone, 2-heptanone, and 4-hydroxy-4-methyl-2 pentanone.

On the other hand, in a case where a metathesis polymerization catalyst requires an activator, a pre-blend containing monomer components and a metathesis polymerization catalyst (hereinafter referred to as "Liquid A" in some cases), and a pre-blend containing monomer components and an activator (hereinafter referred to as "Liquid B" in some cases) may be mixed. During the mixing, a pre-blend composed only of the monomer components (hereinafter referred to as "Liquid C" in some cases) may be used together.

Here, when other components are to be blended, the components can be blended with any pre-blends.

The method including injecting or placing a blend to a space portion of a mold, and thereafter subjecting the blend to bulk ring-opening polymerization include, for example, an RIM molding method, an RTM method, a potting method, a (solid, liquid) transfer molding method, a compression molding method, a printing molding method, a vacuum injection method. An RIM molding method suitably used when a blend is a liquid will be explained hereinbelow.

In the RIM molding method, in order to carry out bulk ring-opening polymerization of a blend in a mold, usually, as a reaction injection molding (RIM) apparatus, a known collision mixing apparatus is used. In the collision mixing apparatus, when two or more pre-blends mentioned above [a pre-blend (α) and a pre-blend (β), or "Liquid A," "Liquid B," and "Liquid C"] are separately introduced, the components are instantly mixed with a mixing head to prepare a blend, and this blend is directly injected into a mold, and heated in the mold to cause a bulk ring-opening polymerization to obtain a cured product. Here, a low-pressure injection machine such as a dynamic mixer or a static mixer can be also used, in place of the collision mixing apparatus.

The above mold is not particularly limited, and it is preferable to use usually the molds in the form of a split mold structure comprising a core mold and a cavity mold. In addition, the mold used is not necessarily an expensive mold having high rigidity, and a mold made of a resin can be used. The materials of the mold are not particularly limited, and the materials include steel, aluminum, zinc alloys, nickel, copper, chromium, which may be produced by any of methods such as casting, forging, metallizing, and electroforming, and those that are plated may be also used.

The temperature of the mold is preferably from 10° to 150°C, more preferably from 30° to 120°C, and even more preferably from 50° to 100°C. The mold clamping pressure is usually within the range of from 0.01 to 10 MPa. The time of the bulk ring-opening polymerization may be properly selected, and after the termination of injection of the pre-blend, the time is usually from one second to 20 minutes, and preferably from 10 seconds to 5 minutes.

After the termination of the bulk ring-opening polymerization, the mold is unclamped to demold, whereby a cured product can be obtained.

One of the great features of the method for producing a norbornene-based crosslinked polymer in this embodiment is in that a cured product obtained by carrying out a primary curing of the step (i) is heated to a temperature equal or higher than the deactivation temperature of the metathesis polymerization catalyst used in the step (ii), to carry out a secondary curing. By carrying out the secondary curing, surprisingly, the glass transition temperature of the polymer obtained is markedly increased, so that heat resistance of the norbornene-based crosslinked polymer obtained would be greatly improved.

In the step (ii), a cured product obtained in the step (i) is heated to a temperature equal or higher than the deactivation temperature of the metathesis polymerization catalyst used to carry out a secondary curing.

Heating of the cured product in the step (ii) is carried out at preferably a temperature higher by 60°C or more, more preferably a temperature higher by 70°C or more, and even more preferably a temperature higher by 80°C or more, than the deactivation temperature of the metathesis polymerization catalyst used. Specific temperature ranges for the heating temperature in the step (ii) are usually 250°C or higher and lower than 350°C, preferably from 280° to 330°C, and more preferably from 300° to 310°C. In addition, the heating time of the cured product in the step (ii) is usually from 10 to 120 minutes, preferably from 20 to 90 minutes, and more preferably from 30 to 60 minutes.

According to the above steps (i) and (ii), the polymerization curing of the above blend is carried out, to give a norbornene-based crosslinked polymer, and subsequently, the step (2) of forming a polyamide-imide layer is carried out. Here, prior to the step (2), the surface of the norbornene-based crosslinked polymer may be polished with, for example, a sandpaper or the like before the formation of the polyamide-imide layer, from the viewpoint of improving adhesion of the polyamide-imide layer and the norbornene-based crosslinked polymer.

In the step (2), the method of forming a polyamide-imide layer is not particularly limited, so long as the method is capable of forming a coating film on the surface of a norbornene-based crosslinked polymer in an appropriate embodiment. The method includes, for example, a co-extrusion method or a coating method or the like using a previously prepared polyamide-imide, a method of forming a film containing a monomer or its oligomer capable of forming a polyamide-imide on the surface of the norbornene-based crosslinked polymer, heating the film or irradiating the film with ultraviolet rays in the presence of a photopolymerization initiator to carry out a polymerization curing, thereby forming a polyamide-imide layer, and the like. Among them, a coating method using a previously prepared polyamide-imide is preferred because of excellent workability.

The coating method is not particularly limited, and conventionally known methods can be employed. The conventionally known methods include, for example, a spin-coating method, a lip coating method, a comma coating method, a roller coating method, a die coating method, a blade coating method, a dip coating method, a bar coating method, a cast film-forming method, a gravure coating method, a print method. Among these coating methods, a dip-coating method, a cast film-forming method, a gravure coating method, and a print method are preferred. In the coating method, at least a part of the surface of a norbornene-based crosslinked polymer obtained by the step (1), or over the entire surface depending upon the use embodiments, is coated with a solution prepared by dissolving a polyamide-imide in a solvent, and a coating film is dried, thereby forming a polyamide-imide layer.

It is preferable that the solvent for dissolving a polyamide-imide is a hydrocarbon-based solvent such as hexane or cyclohexane; an aromatic solvent such as toluene, benzene, or ethylbenzene; a polar solvent such as N-methyl-2-pyrrolidone. In addition, it is preferable that a solvent which is capable of dissolving a norbornene-based crosslinked polymer is used, from the viewpoint of improving adhesion of the polyamide-imide layer and the norbornene-based crosslinked polymer.

The concentration of the solution prepared by dissolving a polyamide-imide in a solvent is not particularly limited, and the concentration can be adjusted by a conventionally known method. For example, the concentration of the solution can be adjusted so as to have a viscosity at which a norbornene-based crosslinked polymer is more easily coated. In addition, since the concentration of the solution influences a thickness of the polyamide-imide layer to be formed, in some cases, the concentration of the solution is adjusted so as to give a desired thickness.

The drying temperature for evaporating the solvent after a norbornene-based crosslinked polymer is coated with a solution of a polyamide-imide is not particularly limited. It is preferable that the drying temperature is set at a temperature equal to or lower than a glass transition temperature of a polyamide-imide. In addition, it is preferable that drying is performed while gradually raising the temperature in order to prevent worsening in the external appearances such as wrinkles. The drying method is not particularly limited, and, for example, a conventionally known method such as a hot air drying can be employed.

After the solvent is evaporated to dry a polyamide-imide layer, it is preferable that the polyamide-imide layer is optionally further heated at a temperature of from 200° to 250°C or so, to cure the polyamide-imide layer.

The polyamide-imide layer may optionally contain a resin other than the polyamide-imide, and an inorganic additive such as nanofillers and scaly fillers.

The thickness of the polyamide-imide layer cannot be unconditionally determined because the thickness depends upon the shapes and applications of the resin molded article. It is preferable that the thickness is usually from 10 to 50 µm or so, from the viewpoint of increasing adhesion to a heat cycle.

In the resin molded article of the present invention, at least a part of the surface of a norbornene-based crosslinked polymer may be coated with a polyamide-imide layer. For example, in a case where an embodiment in which only a part of the surface of a resin molded article is exposed in a high-temperature environment is used, a coating layer made from a polyamide-imide layer may be formed only in the exposed parts.

Here, in the formation of a polyamide-imide layer, in a case where a monomer or its oligomer capable of forming a polyamide-imide is used, the resin molded article of the present invention can be produced by, for example, carrying out a polymerization curing of a blend in the step (1) in one step in accordance with the above step (i), subsequently forming a polyamide-imide layer on the surface of a norbornene-based crosslinked polymer in the step (2) including forming a film containing the above monomer on the surface of a norbornene-based crosslinked polymer obtained by the step (1), and heating the entire polymer to a temperature capable of carrying out a polymerization curing of the above monomer and forming a polyamide-imide, preferably from at 200° to 250°C. Also according to this method, by heating in the step (2), a polyamide-imide layer is formed and at the same time the crosslinking of the norbornene-based crosslinked polymer as a base material can be further progressed, so that a resin molded article having a very high heat resistance can be obtained.

Accordingly, the resin molded article of the present invention can be obtained. The norbornene-based crosslinked polymer, which is the base material for the resin molded article of the present invention, has the property of a high glass transition temperature and excellent heat resistance, while favorably keeping its mechanical properties (for example, tensile strength, flexural strength, flexural modulus, Izod impact strength), and the polyamide-imide that forms a coating layer also has excellent heat resistance. The polymer of a cycloolefin such as norbornene is generally non-polar, so that the polymer has a disadvantage of having a very low adhesive strength or not being adhered to heterogeneous materials having high polarity such as other synthetic resins, metals, and wood materials. However, since the norbornene-based crosslinked polymer used as a base material in the present invention surprisingly adheres favorably to a polyamide-imide to form a complex, heat resistance of both materials is synergistically increased, so that the resin molded article of the present invention shows a very high heat resistance and also has excellent durability.

Utilizing such properties, according to the resin molded article of the present invention, for example, since the polyamide-imide layer can serve as a design side in a resin mold for molding, or also function as a primer layer or an undercoat layer, a heat-resistant paint is applied onto a polyamide-imide layer, whereby a resin molded article with a colored surface having a very high heat resistance can be provided.

The applications of the resin molded article of the present invention are not particularly limited, and the resin molded article can be suitably used in, for example, automobile applications such as bumpers and air deflectors; construction and industrial machinery applications such as wheel loaders and power shovels; recreational applications such as golf carts and game machines; medical applications such as medical instruments; industrial applications such as large-scaled panels and chairs; and house facility applications such as shower pans and washbowls. In addition, the resin molded article of the present invention is suitable as an insulation material having high heat resistance, and can be suitably used in electric insulation applications such as electric insulation encapsulation materials and electric insulation structures, for example, encapsulation applications of electric instruments such as insulated gate bipolar transistor (IGBT) power module (SiC-based, Si-based, GaN-based semiconductors), discrete semiconductors, power semiconductors, chip capacitors, and mold tranformers. Further, the resin molded article can be suitably used in applications that require high heat resistance and high insulation property, such as engine cover applications of automobiles, automobiles housings of gas insulation switching systems (GIS), and housings of electric instruments such as breaker boxes, receiving boards, switchboards, and control boards.

### EXAMPLES

The present invention will be hereinbelow described by means of Examples, without intending to limit the present invention to these Examples. Here, unless specified otherwise, "parts" or "%" are on mass basis.

### Example 1

### (Preparation of Catalyst Solution)

The amount 0.6 parts of a ruthenium catalyst represented by the following formula (7) (VC843, molecular weight: 843, manufactured by Strem Chemicals) as a metathesis polymerization catalyst and 15 parts of 2,6-di-*t*-butyl-*p*-cresol (BHT, antioxidant) were dissolved in 82 parts of cyclopentanone, and thereafter 2.2 parts of 3,4-dimethylpyridine, and 0.1 parts of phenyltrichlorosilane were mixed with the solution, to give a catalyst solution.

Here, a deactivation temperature of the above ruthenium catalyst was experimentally obtained to be 220°C. The experimentation is conducted by taking measurements with DSC (differential scanning calorimeter) at a heating rate of 10°C/min, and a deactivation temperature can be obtained from an exothermic peak.

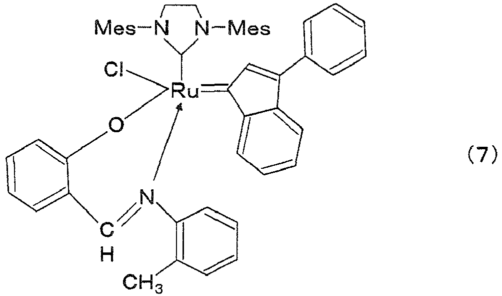

### (Molding of Sample Plates)

The amount 0.5 parts of triphenyl phosphine as a polymerization retardant and 3.3 parts of a catalyst solution prepared above were added to 80 parts of tricyclopentadiene (molecular weight: 198.3) and 20 parts of dicyclopentadiene (molecular weight: 132.2) heated to 40°C as monomers to prepare a blend. Here, the amount of the metathesis polymerization catalyst used was 0.05 mmol based on one mol of the entire monomers used.

As a mold, an aluminum cavity mold having internal space of length 250 mm × width 200 mm × thickness 4 mm was furnished, a blend obtained above was injected into the mold, and a metal plate of length 250 mm × width 200 mm was covered over the cavity mold. The mold injected with the blend was heated in a press molding machine at a temperature of 70°C and pressure of 5 MPa for 5 minutes, to carry out a bulk ring-opening polymerization reaction, to give a cured product [step (i)].

After the above reaction, a mold temperature was immediately raised to 300°C, and kept at 300°C for 1 hour, to carry out a secondary curing [step (ii)], to give a plate-like norbornene-based crosslinked polymer. Here, the norbornene-based crosslinked polymer obtained had a glass transition temperature of 281°C.

The surface of the above plate-like norbornene-based crosslinked polymer was polished with a #600 sandpaper, and the norbornene-based crosslinked polymer was then immersed in a N-methyl-2-pyrrolidone solution of a polyamide-imide ("AI602" manufactured by Dainichiseika Color & Chemicals Mfg. Co., Ltd.) and taken out from the solution to form a film of the polyamide-imide over the entire surface of the polymer. The coated norbornene-based crosslinked polymer was preheated at 100°C for 10 minutes, to allow gasification of the solvent (N-methyl-2-pyrrolidone), and dried, and then heated at 200°C for 2 hours, to carry out curing, thereby forming a polyamide-imide layer on the surface of the polymer [step (2)], to give a plate-like resin molded article. Here, the thickness of the polyamide-imide layer was about 30 µm. In addition, the glass transition temperature of the polyamide-imide constituting the layer was 200°C or higher.

### Example 2

The same procedures as in Example 1 were carried out except that N-methyl-2-pyrollidone solution of polyamide-imide ("VYLOMAX (registered trademark) HR-16NN," manufactured by TOYOBO CO., LTD.) was used as a polyamide-imide to produce a plate-like resin molded article. The polyamide-imide used had a glass transition temperature of 200°C or higher.

### Comparative Example 1

The plate-like norbornene-based crosslinked polymer obtained in Example 1 was used as a resin molded article of Comparative Example 1.

### Comparative Example 2

The same procedures as in Example 1 were carried out except that "NEW HIGHTEM 21 400 Color," manufactured by TOHPE CORPORATION which has been sold as a silicon resin-based heat-resistant paint for outdoor use was used in place of the polyamide-imide to produce a plate-like resin molded article.

Five pieces each of the plate-like resin molded articles obtained in each of Examples and Comparative Examples were furnished, and allowed to stand in the environment of 235°C for 960 hours. The flexural strength and the flexural modulus of each of the resin molded articles were measured at 23 °C before and after allowing them to stand, and also, the thickness of the oxidization layer on the surface of each of the resin molded articles was measured. Here, the flexural strength and the flexural modulus were measured in accordance with the flexural strength and the flexural modulus (JIS K7171). The above oxidization layer refers to a layer that was formed by gradually oxidizing the base material (the norbornene-based crosslinked polymer) from the surface in a high-temperature environment, and the thickness of the oxidization layer was measured with a digital microscope VHX-5000 manufactured by Keyence. The results are shown in Table 1. The flexural strength, the flexural modulus and the thickness of the oxidization layer in Table 1 were a mean of five pieces of resin molded articles.

### [Table 1]

**Table 1**

| | Example 1 | | Example 2 | | Comparative Example 1 | | Comparative Example 2 | |
|---|---|---|---|---|---|---|---|---|
| | Polyamide-imide Coating Layer | | Polyamide-imide Coating Layer | | No Coating Layer | | Silicon Resin-Based Coating Layer | |
| | Before Allowing to Stand | After 960 h | Before Allowing to Stand | After 960 h | Before Allowing to Stand | After 960 h | Before Allowing to Stand | After 960 h |
| Flexural Strength (MPa) | 146 | 60 | 159 | 72 | 94 | 11 | 120 | 15 |
| Flexural Modulus (MPa) | 13 | 10 | 13 | 11 | 13 | 3 | 13 | 3 |
| Thickness of Oxidization Layer (µm) | 0 | 66 | 0 | 395 | 0 | 1,470 | 0 | 1,320 |

It can be seen from the above results that in the resin molded articles of Examples 1 and 2 where the norbornene-based crosslinked polymers are coated with a polyamide-imide layer, the oxidization of the norbornene-based crosslinked polymer is suppressed even in a high-temperature environment, and the resin molded article can maintain excellent strength, so that the resin molded articles have excellent heat resistance and durability. On the other hand, the resin molded article of Comparative Example 1 which is only composed of a norbornene-based crosslinked polymer without coating with a polyamide-imide layer and the resin molded article of Comparative Example 2 where a norbornene-based crosslinked polymer is coated with another resin layer show marked progresses in oxidization of the norbornene-based crosslinked polymer, and marked lowering of strength.

### INDUSTRIAL APPLICABILITY

Since the resin molded article of the present invention has highly excellent heat resistance and durability, the resin molded article can be suitably used in applications that require heat resistance such as engine cover applications for automobiles and electric insulation applications.

## Claims

1. A method for producing a resin molded article, comprising
step (1) heating a blend comprising at least one member selected from the group consisting of dicyclopentadiene-based monomers, tetracyclododecene-based monomers, and tricyclopentadiene-based monomers, and a metathesis polymerization catalyst to carry out a polymerization curing; and
step (2) forming a polyamide-imide layer on a surface of the norbornene-based crosslinked polymer obtained in the step (1),
wherein the polymerization curing of the blend in the step (1) comprises:
step (i): heating the blend to a temperature lower than a deactivation temperature of the metathesis polymerization catalyst to carry out a primary curing; and
step (ii): heating a cured product obtained in the step (i) to a temperature equal to or higher than a deactivation temperature of the metathesis polymerization catalyst to carry out a secondary curing.

2. The method according to claim 1, wherein the tricyclopentadiene-based monomers are contained in an amount of 50% by mass or more of the entire monomers contained in said blend.

3. The method according to claim 1 or 2, wherein, in said step (i), said blend is heated to a temperature of 25°C or higher and lower than 220°C to carry out a primary curing.

4. The method according to any one of claims 1 to 3, wherein, in said step (ii), said cured product is heated to a temperature of 250°C or higher and lower than 350°C to carry out a secondary curing.

## Patentansprüche

1. Verfahren zur Herstellung eines Harzformartikels, umfassend
Schritt (1) Erhitzen einer Mischung, die mindestens ein Mitglied, ausgewählt aus der Gruppe, bestehend aus Monomeren auf Dicyclopentadienbasis, Monomeren auf Tetracyclododecenbasis und Monomeren auf Tricyclopentadienbasis, und einen Metathesepolymerisationskatalysator umfasst, um eine Polymerisationshärtung durchzuführen; und
Schritt (2), Bilden einer Polyamid-Imid-Schicht auf einer Oberfläche des in Schritt (1) erhaltenen vernetzten Polymers auf Norbornenbasis,
wobei die Polymerisationshärtung der Mischung in Schritt (1) umfasst:
Schritt (i): Erhitzen des Gemischs auf eine Temperatur, die niedriger ist als eine Deaktivierungstemperatur des Metathesepolymerisationskatalysators, um eine Primärhärtung durchzuführen; und
Schritt (ii): Erhitzen eines in Schritt (i) erhaltenen gehärteten Produkts auf eine Temperatur, die gleich oder höher als eine Deaktivierungstemperatur des Metathesepolymerisationskatalysators ist, um eine sekundäre Härtung durchzuführen.

2. Verfahren nach Anspruch 1, wobei die Monomere auf Tricyclopentadienbasis in einer Menge von 50 Massenprozent oder mehr der gesamten in der Mischung enthaltenen Monomere enthalten sind.

3. Verfahren nach Anspruch 1 oder 2, wobei in dem Schritt (i) die Mischung auf eine Temperatur von 25 °C oder höher und niedriger als 220 °C erhitzt wird, um eine primäre Härtung durchzuführen.

4. Verfahren nach einem der Ansprüche 1 bis 3, wobei in dem Schritt (ii) das gehärtete Produkt auf eine Temperatur von 250 °C oder höher und niedriger als 350 °C erhitzt wird, um eine Sekundärhärtung durchzuführen.

## Revendications

1. Un procédé de production d'un article moulé en résine, comprenant
étape (1) : chauffage d'un mélange comprenant au moins un élément choisi dans le groupe constitué par les monomères à base de dicyclopentadiène, les monomères à base de tétracyclododécène et les monomères à base de tricyclopentadiène, et un catalyseur de polymérisation par métathèse pour effectuer un durcissement par polymérisation ; et
étape (2) : formation d'une couche de polyamide-imide sur une surface du polymère réticulé à base de norbornène obtenu dans l'étape (1),
dans lequel le durcissement par polymérisation du mélange dans l'étape (1) comprend :
étape (i) : chauffage du mélange à une température inférieure à une température de désactivation du catalyseur de polymérisation par métathèse pour effectuer un durcissement primaire ; et
étape (ii) : chauffage d'un produit durci obtenu dans l'étape (i) à une température égale ou supérieure à une température de désactivation du catalyseur de polymérisation par métathèse pour effectuer un durcissement secondaire.

2. Procédé selon la revendication 1, dans lequel les monomères à base de tricyclopentadiène sont contenus en une quantité de 50% en masse ou plus de la totalité des monomères contenus dans ledit mélange.

3. Procédé selon la revendication 1 ou 2, dans lequel, dans ladite étape (i), ledit mélange est chauffé à une température de 25 °C ou plus et inférieure à 220 °C pour effectuer un durcissement primaire.

4. Procédé selon l'une quelconque des revendications 1 à 3, dans lequel, dans ladite étape (ii), ledit produit durci est chauffé à une température supérieure ou égale à 250 °C et inférieure à 350 °C pour réaliser un durcissement secondaire.
